# EUROPEAN PATENT APPLICATION

(11) **EP 3 633 258 A1**
(43) Date of publication of application: **08.04.2020**
(21) Application number: 19200542.9
(22) Date of filing: 30.09.2019
(51) Int. Cl.: F16L 37/107, F16L 37/113

(54) **QUICK-CONNECT PIPE FITTING**

(30) Priority: 04.10.2018 IT 201800009151
(71) Applicant: Raccorderie Metalliche S.p.A., 46010 Campitello di Marcaria (Mantova) (IT)
(72) Inventor: Pozzetti, Silvio, 46030 Virgilio (MN) (IT)
(74) Representative: Karaghiosoff, Giorgio Alessandro

(57) **Abstract**

Quick-connect pipe fitting, comprising a ring nut 1 adapted to cooperate with one pipe end 20 intended for the connection, and a bushing 2 adapted to cooperate with the other pipe end 10, said ring nut 1 and said bushing 2 being coaxial and concentric, and said bushing 2 being able to be inserted into said ring nut 1 and both of them being equipped with releasable mutual-coupling means 101, 102, the quick-connect pipe fitting comprising an annular gasket 3 suitably compressed between said ring nut 1 and said bushing 2 upon their coupling, characterized in that the coupling means 101, 102 comprise two or more radially protruding reliefs and two or more cam profiles complementary to said reliefs, formed on the mutually facing surfaces of said ring nut 1 and said bushing 2, said gasket 3 acting as elastic loading means to elastically load said coupling means.

## Description

The present invention relates to pipe fittings, and in particular relates to quick-connect pipe fittings.

In particular, the invention refers to a pipe fitting provided in combination with a first and a second pipe terminals to be sealingly connected together, the pipe terminals each comprising at their ends a terminal flange consisting of a radial annular widening, a ring nut being slipped onto a first one of the two pipe terminals and comprising at one end opposite the end facing the second of the two terminals a radial annular narrowing whose inner diameter substantially corresponds to or is slightly greater than the outer diameter of said first pipe terminal and whose radial width at least corresponds to the radial width of the end flange of said corresponding first pipe terminal, whereas the second pipe terminal is combined with sealing tightening means against said first pipe terminal, the means removably engaging with said ring nut, said ring nut and said tightening means being provided respectively with at least one inner radial projection intended to cooperate with peripheral engaging grooves of said projection of said coupling means or vice versa, the grooves forming cam profiles for the progressive radial approach of the two pipe terminals, at least one sealing gasket that can be compressed between said two pipe terminals being provided.

Fittings of the aforesaid type are known, for example, from documents DE102004012817, US4,466,020, US1,843,394, WO2007/146551. In the connection of pipe sections designed to withstand an appreciable pressure load, the fitting normally makes the two pipe ends integral with each other simultaneously acting to compress the sealing element, which can either surround the ends to be connected or be taken in between them. Fittings involving the coupling of threaded parts to one another are very common, however the wear of the thread makes it difficult to remove and reposition the fitting, and also generally compresses the gasket so as to promote early aging thereof, and therefore the at least partial decrease of effectiveness.

The advantage of quick-release fittings is that they are easy to use, stable but absolutely reversible, and can provide optimum compression of the gasket. The main drawback of this type of fittings is the construction complication, which actually makes them not very versatile in different fields of application.

Object of the present invention is therefore a quick-connect pipe fitting that is simple to construct and guarantees, once installed, optimal compression of the gasket element intended for its sealing.

Object of the present invention is therefore a quick-connect pipe fitting, comprising a ring nut adapted to cooperate with a first pipe terminal intended for the connection, and a bushing adapted to cooperate with the second pipe terminal, said ring nut and said bushing being coaxial and concentric, and said bushing being able to be slipped onto said second terminal and having an inner diameter substantially identical or slightly greater than the outer diameter of said terminal and having at least at the end facing said first pipe terminal an annular head with a radial thickness at least corresponding to the radial extent of the end flange on said second pipe terminal, whereas said bushing has an outer diameter whereby it can be inserted into said ring nut and said bushing being provided on the radially outer side of releasable mutual-coupling members i.e. of said grooves that form cam profiles of said inner radial coupling projections provided on said ring nut or vice versa.

The invention provides a connecting fitting for pipes of the quick coupling type, having the advantage of being reusable to connect pipe terminals when the diameter of these is obviously consistent with the dimensions of the fitting itself. In case of a new use on the same pipe terminals or to sealingly connect the terminals of other pipes to each other, it is sufficient to replace the gasket to obtain the perfect functionality of the fitting as regards both the mechanical connection and the seal.

According to an advantageous embodiment, said at least one annular gasket is provided positioned inside the ring nut when the two terminals are connected to each other.

Preferably according to an embodiment variation, said gasket is provided interposed between the facing surfaces of the end widenings on the pipe terminals to be connected to each other.

An embodiment provides that said gasket has an annular shape with inner diameter and outer diameter substantially corresponding to the inner and outer diameters of said end widenings of said two pipe end sections.

In an embodiment, each of said cam profiles comprises a position for introducing the relief, a coupling section, a locking station, a decoupling section, and a position for extracting the relief.

Advantageously, said gasket cooperates with said coupling means so that the compression in the coupling section is greater with respect to that operating in the locking station; in particular, the compression of the gasket in the coupling step is in the order of 40% by volume, while the compression in the locking station is in the order of 25% by volume.

In an embodiment variation, said ring nut is equipped with two or more cam profiles on the inner side wall, and said bushing is provided with two or more reliefs complementary to said cam profiles and protruding radially outwards from the outer side wall of said bushing.

In another embodiment variation, said ring nut is equipped with two or more reliefs protruding radially inwards from its inner side wall, and said bushing is equipped with two or more cam profiles complementary to said reliefs and obtained on the outer side wall of said bushing.

According to an advantageous characteristic, the ring nut has an axial extent such that it completely overlaps from the outside to the two radial end widenings of the two pipe terminals, to the gasket interposed between them and to the cam-shaped grooves, as well as to the engaging projection(s) cooperating therewith, thereby making said parts inaccessible from the outside.

Referring to a further characteristic, the radial projection and the groove(s) cooperating therewith have pilot chamfers.

An embodiment provides that the radial projection has essentially quadrangular polygonal cross-section in which at least three of the four angle regions are chamfered or flattened to form an inclined surface with respect to the sides of the shell wall of said projection, whereas at least one of the angle regions is made with a sharp edge, said three inclined flattening surfaces of said three inclined angle regions being correspondingly inclined with respect to inclined sections deflecting from the axial direction of the groove and the sharp-edged corner being provided in the cooperation region of said projection with a radial shoulder in an interlocking niche provided in a wall of said groove and corresponding to the sealing tightening position, axially against each other of said two pipe terminals.

In particular, the groove(s) each has an axial branch which opens at the head end of said bushing and which are open at said end and sections circumferentially oriented with respect to said bushing, the connection between said sections being constituted by walls inclined in a way corresponding to the slopes of the flattened surfaces of the angles of the engaging projection in said groove(s).

Further advantages and characteristics of the fitting according to the present invention will be apparent from the description of some embodiments thereof, made by way of example and without limitation with reference to the accompanying drawing tables, wherein:
figure 1 is an exploded perspective view of a first embodiment of the fitting according to the present invention;
figure 2 is an exploded perspective view of a second embodiment of the fitting according to the present invention;
figures 3 to 6 depict the steps of the interaction between the coupling means of the fitting according to the invention;
figure 7 is a longitudinal section view of the fitting in the first embodiment, shown when the coupling is complete; and
figure 8 is a longitudinal section view of the fitting in the second embodiment, depicted when the coupling is complete.

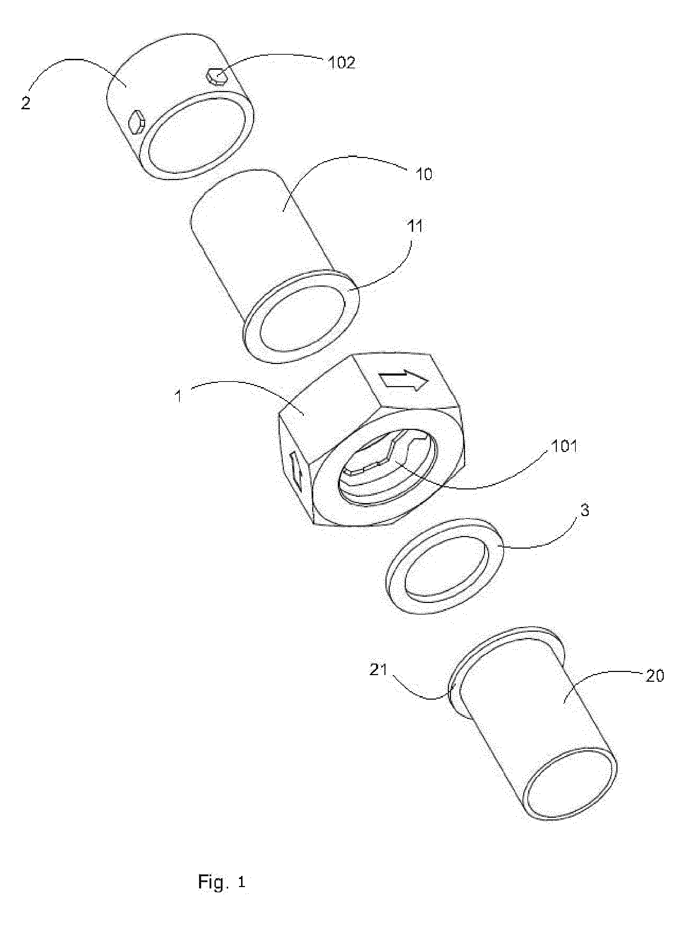

Figure 1 shows a first embodiment of the fitting according to the present invention; numeral 1 denotes the ring nut having a cam profile 101 on the inner side wall. The bushing 2, on the other hand, is provided with reliefs 102 protruding radially outwards, intended to cooperate with the cam profile 101. The ring nut 1 and the bushing 2 cooperate with the flange 21 of the pipe end 20 and with the flange 11 of the pipe end 10, respectively. As will be evident further on, the gasket 3 is taken in-between the two flanges.

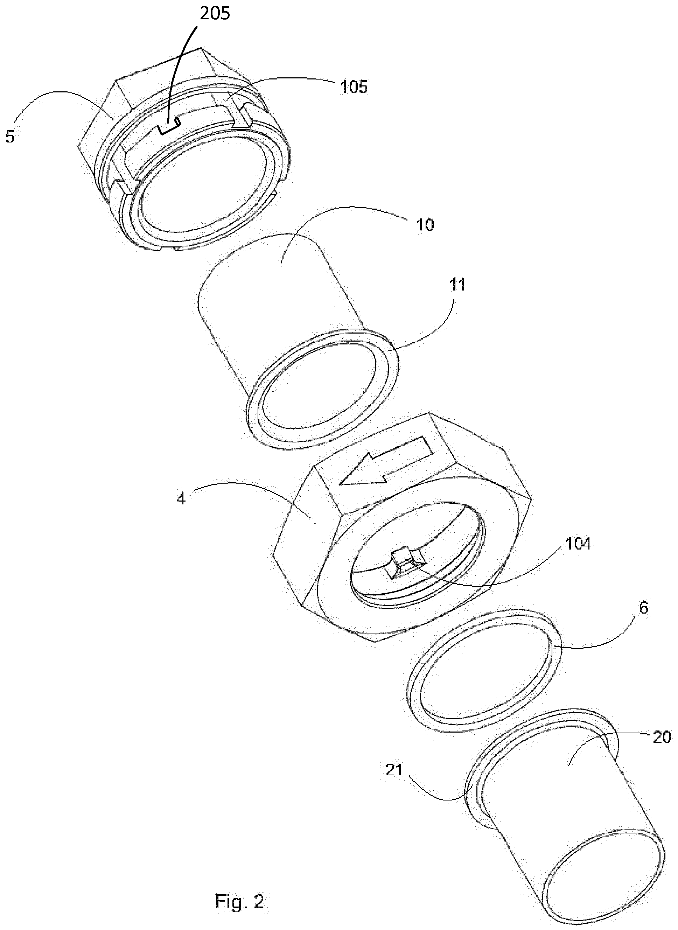

Figure 2 shows a second embodiment of the fitting according to the present invention; numeral 4 denotes the ring nut having the reliefs 104 protruding from its inner side wall. On the outer side wall of the bushing 5 there is a cam profile 105, which is intended to cooperate with the reliefs 104. The ring nut 4 and the bushing 5 cooperate with the flange 21 of the pipe end 20 and with the flange 11 of the pipe end 10, respectively. As will be evident further on, the gasket 6 is taken in-between the two flanges.

As can be seen in figure 2, in an intermediate region, between the engaging and/or slipping off openings 305 in the cam track 105, below also referred to as inlet and outlet portions, an axial interlocking notch 205 which defines the locking position or station for the projections 104 on the ring nut or nut 4 can be provided. Said axial openings 305 are provided angularly distributed so as to form a crown along the cylindrical surface of the element 5, while the notches 205 are also distributed with a similar angular arrangement in the form of a crown that is angularly offset with respect to that of the openings 305. This way, there is a corresponding number of notches 104 which are together each in a position corresponding to an opening 305 or a notch 205.

As it is still evident from the figures, the connection can be configured to set the rotation of the nut both clockwise as in fig. 1, and counterclockwise as in figures 2 and this can be valid alternatively for both the embodiment variations of figures 1 and 2.

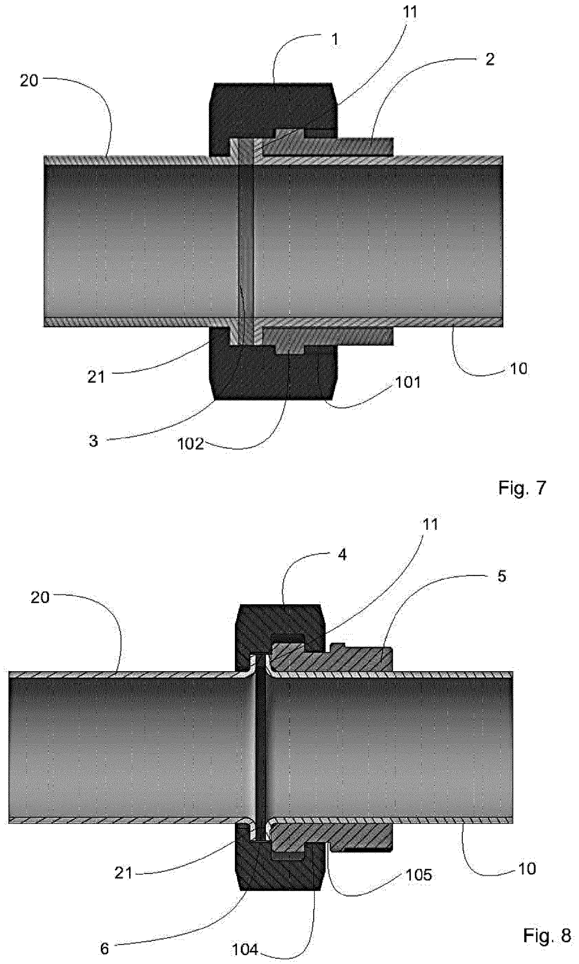

Figure 7 shows a longitudinal section of the first embodiment of the fitting; equal parts correspond to equal numerals. The figure highlights the fact that gasket 3 is taken in-between the flanges 21 and 11 of the pipes 20 and 10, the flanges being tightened together by the coupling of the bushing 2 with the ring nut 1.

Figure 8 is a longitudinal section of the second embodiment of the fitting; equal parts correspond to equal numerals. The figure highlights the fact that gasket 3 is taken in-between the flanges 21 and 11 of the pipes 20 and 10, the flanges being tightened together by the coupling of the bushing 5 with the ring nut 4.

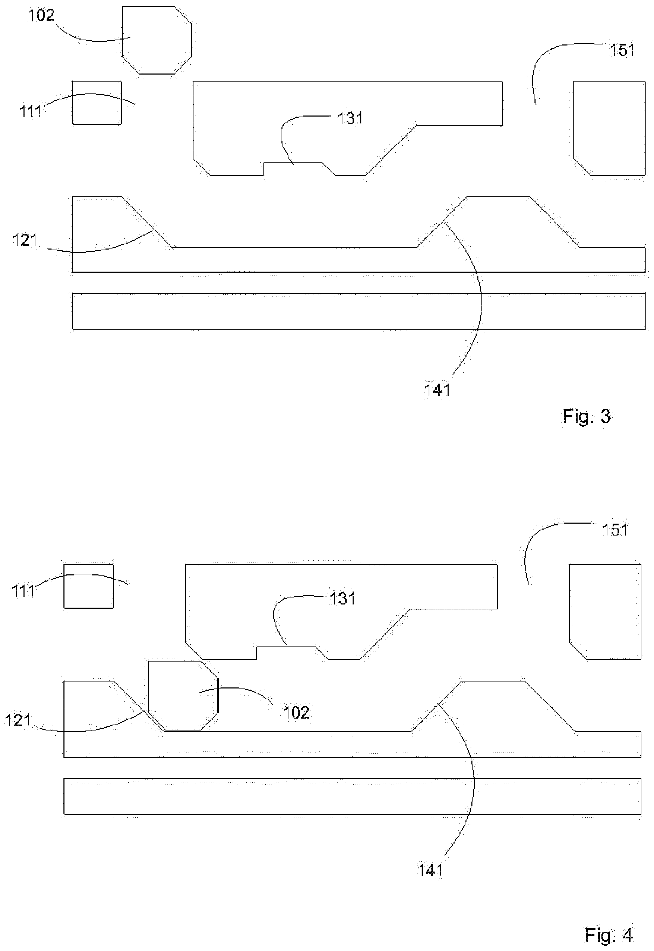

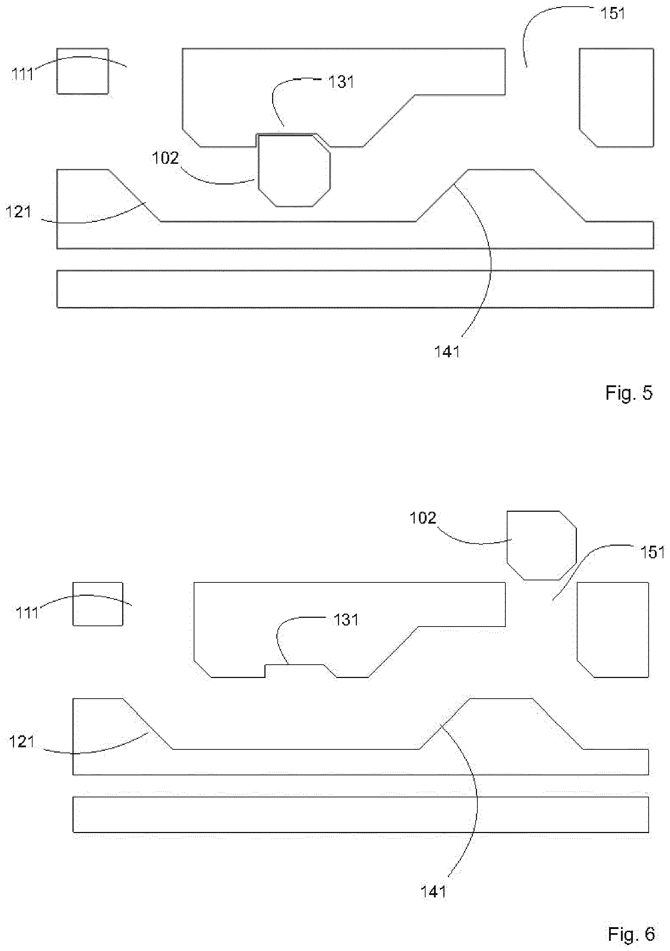

The operation of the fitting according to the present invention will be evident from the following, with particular reference to figures 3 to 6 of the accompanying drawings. Figure 3 shows, in plan projection, the interaction between the relief 102 of the bushing 2 and the cam profile 101 of the ring nut 1; in this step the relief is in front of the inlet position in profile 101; when the relief, as shown in figure 4, reaches the end of the coupling section, the two flanges reach the maximum compression level of the gasket 3 inside them. Continuing the rotation in the direction indicated by the arrow on the ring nut 1 of figure 1, at a certain point the relief meets the locking station 131 and is inserted therein, this resulting in a reduction in the compression of the gasket, as shown in figure 5. A further rotation in the direction of the arrow leads the relief to face the decoupling section 141 and then the outlet position 151. The compression of the gasket in the coupling step can reach 40%, while in the locking station it reaches 25%.

The aforesaid values are the standard compression values of the gasket.

According to an advantageous embodiment, the compression of the gasket can be varied depending on its material and/or the working conditions, for example the working temperature conditions.

This variation can be obtained by operating alternatively or in combination thanks to a variation in the axial thickness of the gasket and/or a variation in the axial position of the cam track that operates against the projections in the working positions i.e. with the projections in the locking stations as depicted above with reference to figures 3 to 6.

Of course, what has been described could similarly represent the interaction between the reliefs 104 protruding from the ring nut 4 with respect to the cam profile 105 formed on the bushing 5.

In practice, the fitting benefits on the one hand from the simplicity of the structures and movements of the coupling means that are used, and on the other hand from the elasticity of the gasket that is taken in-between the two pipe portions intended to be connected.

This solution, in both the illustrated and described embodiments, eliminates the risk of wear due to excessive compression of the gasket, while benefiting from the action of elastic loading exerted by the gasket itself. Moreover, the inner surface of the fitting is continuous, without interstices and therefore more effective in conveying the fluid, with less turbulence and removal of material deposits. Tightening is as simple as uncoupling, and there are no wear problems linked with the use of threads.

The gasket is always made of elastomeric material, with different hardnesses depending on the application and the fluid, whereas the parts of the fitting are preferably made of metal material, such as steel, steel alloys, or alloys of other metals.

## Claims

1. Pipe fitting provided in combination with a first and a second pipe terminals to be sealingly connected together, the pipe terminals each comprising at their end an end flange consisting of a radial annular widening, a ring nut slipped onto a first one of the two pipe terminals being provided, the ring nut comprising at one end opposite the end facing the second of the two terminals a radial annular narrowing whose inner diameter substantially corresponds to or is slightly greater than the outer diameter of said first pipe terminal and whose radial width at least corresponds to the radial width of the end flange of said corresponding first pipe terminal, whereas the second pipe terminal is combined with releasable sealing tightening means against said first pipe terminal, the means removably engaging said ring nut, said ring nut and said tightening means being provided respectively with at least one inner radial projection intended to cooperate with peripheral engaging grooves of said projection of said coupling means or vice versa, the grooves forming cam profiles for the progressive radial approach of the two pipe terminals, at least one sealing gasket that can be compressed between said two pipe terminals being provided
**characterized in that**
said releasable sealing tightening means consist of a bushing adapted to cooperate with the second pipe terminal, said ring nut and said bushing being coaxial and concentric, and said bushing being able to be slipped onto said second pipe terminal and having an inner diameter substantially identical or slightly greater than the outer diameter of said terminal and said bushing having at least at the end facing said first pipe terminal an annular head surface with a radial thickness at least corresponding to the radial extent of the end flange on said second pipe terminal, whereas said bushing has an outer diameter whereby it can be inserted into said ring nut and said bushing is provided on the radially outer side of said grooves that form cam profiles of said inner radial coupling projections provided on said ring nut or vice versa.

2. Fitting according to claim 1, wherein each of said cam profiles comprises a position for introducing the relief, a coupling section, a locking station, a decoupling section, and a position for extracting the relief.

3. Fitting according to claim 2, wherein said gasket cooperates with said coupling means so that the compression in the coupling section is greater than that operating in the locking station.

4. Fitting according to claim 3, wherein the compression of the gasket during the coupling is about 40% by volume, while the compression in the locking station is about 25% by volume.

5. Fitting according to one or more of the preceding claims wherein said at least one annular gasket is provided positioned inside the ring nut when the two terminals are connected to each other.

6. Fitting according to one or more of the preceding claims, wherein said gasket is provided interposed between the facing surfaces of the end widenings on the pipe terminals to be connected to each other.

7. Fitting according to one or more of the preceding claims, wherein said gasket has an annular shape with inner diameter and outer diameter substantially corresponding to the inner and outer diameters of said end widenings of said two end sections of pipe.

8. Fitting according to one or more of the preceding claims, wherein the ring nut has an axial extent such that it completely overlaps from the outside to the two radial end widenings of the two pipe terminals, to the gasket interposed between them and to the cam-shaped grooves, as well as to the engaging projection(s) cooperating therewith, thereby making said parts inaccessible from the outside.

9. Fitting according to claim 7, wherein the radial projection and the groove(s) cooperating therewith have pilot chamfers.

10. Fitting according to claim 8, wherein the radial projection has essentially quadrangular polygonal cross-section in which at least three of the four angle regions are chamfered or flattened to form an inclined surface with respect to the sides of the shell wall of said projection, whereas at least one of the angle regions is made with a sharp edge, said three inclined flattening surfaces of said three inclined angle regions being correspondingly inclined with respect to inclined sections deflecting from the axial direction of the groove and the sharp-edged corner being provided in the cooperation region of said projection with a radial shoulder in an interlocking niche provided in a wall of said groove and corresponding to the sealing tightening position, axially against each other of said two pipe terminals.

11. Fitting according to one or more of the preceding claims, wherein the groove(s) each has an axial branch which opens at the head end of said bushing and which are open at said end and sections circumferentially oriented with respect to said bushing, the connection between said sections being constituted by walls inclined in a way corresponding to the slopes of the flattened surfaces of the angles of the engaging projection in said groove(s).

12. Fitting according to any one of the preceding claims, wherein said ring nut is equipped with two or more cam profiles on the inner side wall, and said bushing is provided with two or more reliefs complementary to said cam profiles and protruding radially outwards from the outer side wall of said bushing.

13. Fitting according to any one of the preceding claims, wherein said ring nut is equipped with two or more reliefs protruding radially inwards from its inner side wall, and said bushing is equipped with two or more cam profiles complementary to said reliefs and obtained on the outer side wall of said bushing.
